# EUROPEAN PATENT SPECIFICATION

(11) **EP 2 315 656 B1**
(45) Date of publication and mention of the grant of the patent: **08.01.2014**
(21) Application number: 09785532.4
(22) Date of filing: 26.08.2009
(51) Int. Cl.: B29C 70/64, B29C 70/02, B29D 24/00, B29C 70/32, E21B 17/22, F16L 57/06, E21B 17/10, B29K 709/02

(54) **COMPOSITE TUBULAR PRODUCT AND METHOD OF MAKING**
ROHRFÖRMIGES VERBUNDPRODUKT UND VERFAHREN ZUR HERSTELLUNG
PRODUIT TUBULAIRE COMPOSITE ET PROCÉDÉ POUR LA FABRICATION

(30) Priority: 27.08.2008 GB 0815572
(43) Date of publication of application: 04.05.2011
(73) Proprietor: Lochnagar Consulting AG, 6047 Kastanienbaum (CH)
(72) Inventor: CAMERON, Duncan, Blairdaff, Inverurie Aberdeenshire AB51 5LS (GB)
(74) Representative: Ede, Eric
(86) International application number: PCT/GB2009/051070
(87) International publication number: WO 2010/023476

(56) References cited:
- JP-A- 60 078 727
- US-A- 5 330 790
- US-A1- 2002 119 271
- US-B1- 6 666 267

## Description

### Field of the Invention

This invention relates to tubular elements such as sections of drill pipe, work strings, sub assemblies, risers, rods and the like elongate elements adapted for use downhole in drilling and oil & gas prospecting and recovery (hereinafter "tubulars").

### Background to the Invention

Currently (2008), it is widely recognised that production of oil & gas from readily accessible fields is a matter of history and that prospects for discovery of virgin reservoirs of such resources lie offshore in coastal waters and in generally challenging sites. The issue of deep drilling brings commercial difficulties in terms of recovery of the products, but more significantly complex technical difficulties in accessing the products in the first place. Towards the end of the last century off shore drilling into reservoirs at depths of 1300 feet was considered deep, but now it is not unusual to be penetrating wells under some 10,000 feet of ocean. Drill ships and platforms of various types have been successfully used for this work depending upon the site. It also has to be considered that the total drill depth for converting a deep reservoir into a well may be of the order of 25,000 feet taking account of deviated (steerable) drilling techniques. When it is realised that the drill has to transit the depth of water before landing upon the surface to be drilled, the enormity of the technical issues is immediately apparent: for example the weight of the drill string alone is a significant factor in operating a drilling rig both in terms of function and safety issues. Similar considerations apply to the riser.

Commonly the drill pipe is formed from steel, and although there have been some proposals to address the weight problem by adopting composite materials; such a switch in material manifests different problems. It has been found that in order to match the strength of steel tubulars, the wall thickness of the corresponding composite has to increase markedly, but then there are losses in terms of properties recognised in steel such as ductility (flexibility) and durability (wear resistance). A composite that is theoretically capable of carrying the tensile load may be unusable on account of liability to fracture in a heaving swell at sea or jarring in a hard formation, or due to inferior wear characteristics for repeated run-in and pull out trips.

An additional problem with costs for drilling operations lies in the expensive wear on the drill pipe as it is reciprocated (repeatedly run in and pulled out of the well) in order to extend its length by addition of further sections of drill pipe to extend drilling depth, or sometimes to replace it with a work string e.g. including a fishing tool to retrieve junk such as broken drill pipe etc. Whereas it has been contemplated that wear can be mitigated to an extent by use of a hard facing material, this is contemplated around the upset region of metal drill pipe joints and is not considered to be a universal solution.

Equally, wear on casing has to be considered as a problem that arises especially during reciprocation of drill or other work strings.

Finally, it will be appreciated that during a drilling operation circulation fluids (mud) are passed through and around the drill string. Such fluids facilitate drilling by lubricating and clearing the bit of drill cuttings and formation detritus. Consequently, the return fluid passing up the annulus to surface around the drill string is loaded with abrasive drill cuttings which are detrimental to previously considered composite materials.

Therefore, until now, the various problems associated with metal tubulars that are subject to wear on external contact surfaces due to rotation and/or reciprocation within a borehole have not been adequately addressed by known composite products.

A casing centraliser is described in US 6 666 267 B1, which has at least one surface portion of a plastics material, or a ceramic material, cermet or submicron grained cemented carbide. The centraliser has longitudinal ribs or blades contacting the wellbore wall where required to provide an annular space for cementation of the casing within the wellbore.

A method of making a composite spoolable (coil) tubing as per the preamble of claim 10 with a sensor is described in US 200211927 A1 which includes an inner pressure barrier layer, a composite layer and an outer pressure barrier. The composite layer may comprise carbon, aramid or glass fibres in a matrix or resin.

An object of the present invention is to provide a composite product that is useful in replacing metallic tubulars adapted for use downhole in the oil & gas industry.

### Summary of the Invention

This object is achievable by the invention, as defined in the claims, and providing a composite elongate tubular to be more particularly described by illustrative example hereinafter.

The composite elongate tubular may comprise an external surface formed at least in part by a rib, wherein said rib has a composite material surface in which a plurality of ceramic elements are fixed, said elements offering low friction points of contact in use, and being partially embedded in said composite material surface.

The mandrel may be of any suitable metallic material.

The ribs may be configured to extend generally in alignment with the longitudinal axis of the elongate tubular, but preferably extend in a curved path that progresses around the element as a winding, e.g. a helical winding or spiral configuration, such that there is progressive angular displacement or offset throughout the length of the ribs.

The composite elongate tubular may comprise a mandrel adapted to be connected within a string of elongate tubulars, a composite material surface upon an outer surface of the mandrel and comprising reinforcement material within a bonding material, said composite material surface providing an external contact surface in which a plurality of ceramic elements are fixed, said elements offering low friction points of contact in use, and being partially embedded in the composite material, and a plurality flow channels defined in the composite material surface between the external contact surface in which a plurality of ceramic elements are fixed.

In all aspects of the invention, the composite material comprises a fibre-reinforced polymer resin of a type known generally in the art as GRP or GFK of which many specific examples are commercially available.

Preferably in each of the aforesaid aspects of the invention the ceramic elements are discrete particulate entities with smooth contact surfaces, for example ceramic beads.

The ceramic beads are durable and may be treated to enhance hardness and resistance to wear for the intended use in the composite elongate tubular of this invention.

The ceramic elements may be randomly positioned or fixed in a regular pattern or array.

Ceramic elements suitable for this purpose would be in particulate form, especially as rounded beads (spherical or near spherical particles) of a size typically in the range of 0.3 to 2mm diameter/longest dimension, or even larger. Suitable particles include materials selected from zirconium oxide (ZrO₂), silicon nitride, cubic boron nitride, and mixtures of two or more thereof.

Optionally these particles or equivalent are surface treated with a silane coupling agent (e.g. an epoxysilane) or similar primer to improve compatibility with the resin matrix of a GRP(GFK) winding making up the composite material surface.

Application of such particles is achievable by use of a gravity feed hopper in conjunction with a pneumatic device arranged to blow particles emerging from the hopper in a predetermined direction. The air flow generated can be used to convey particles into a shaped distribution nozzle for applying the particles to the GRP(GFK) resin matrix before it is fully cured to form the composite material surface. In this way a uniform surface or a patterned array of ceramic particles can be selectively generated upon the tubular by control of the distribution nozzle.

Control of air pressure and air flow rate allows control of the process, and use of a gate or valve on the hopper for throttling feed of the particles into the air stream also provides a further degree of control.

Optionally, the applied particles are pressed into the GRP(GFK) resin matrix after deposit by the air stream, to a predetermined extent for adequate retention whilst leaving a part-spherical surface exposed.

Application of a roller device over the particles can achieve sufficient fixing into the uncured GRP(GFK) resin matrix. The roller may have a hard rubber surface.

In the case of application treatment for smaller areas, the ceramic particles can be firstly distributed upon and applied to an adhesive strip or non woven fleece which is then wound or applied to the tubular to present the ceramic particle side onto the tubular. A hard rubber roller may be used to apply light pressure to the back side of the adhesive strip or fleece, transferring and embedding the particles in the uncured GRP/CFK resin matrix. The adhesive strip or fleece can then be removed, either prior to curing of the tubular, or after the curing process, leaving the transferred ceramic particles to be fixed into the resin matrix as it cured.

Preferred embodiments of the improved composite tubulars of the invention take the form of drill pipe stands, sub assemblies for attachment within the length of a drill string.

The composite tubular may have end parts which have metal surfaces which are substantially free of composite materials.

According to yet another aspect of the invention there is provided a method of making a composite elongate tubular having an external surface in which a plurality of ceramic elements are fixed, said elements offering low friction points of contact in use, and being partially embedded in a composite material, wherein the method comprises providing an elongate mandrel having a throughbore aligned with the longitudinal axis of the mandrel, said mandrel having ends adapted to form a joint with another component of a string of connectable elongate tubulars,
treating the mandrel under composite material-forming conditions with components comprising reinforcement material and a bonding material in an amount sufficient to form a composite material surface, wherein ceramic elements are also applied before the composite material is fully formed, such that said ceramic elements present exposed surfaces in the formed composite material surface.

The mandrel is wound with reinforcing fibres to which a bonding material is applied, and the winding is such as to develop a continuous surface, or in the alternative may develop a rib configuration around the mandrel with flow channels on either side of the rib configuration. When a ribbed configuration is formed, any functional configuration thereof may be adopted including without limitation a plurality of such ribs, with or without an offset.

Preferably also the ceramic elements are added during the winding process so as to provide exposed contact surfaces in the formed composite material surface, ideally only in the outermost rib surface.

Alternatively a lay up procedure may be adopted to form the desired rib configuration of composite materials, with ceramic elements being applied before the composite material is cured.

The reinforcement material to be adopted in forming the composite of any aspect of the invention would be any suitable reinforcing fibres which may include glass fibre, boron fibres, KEVLAR^{®} fibres, carbon fibre or the like reinforcements suitable for use in a curable bonding material such as a resin. The particular form of the reinforcing fibres may vary, and may range from particles, whiskers, fibrils, extended length fibres, chopped fibres, sheets, strips or mats thereof.

### Description of the Drawing

An embodiment of the present invention will now be described, by way of example only, with reference to the accompanying drawing, in which:
Figure 1 is a partially cutaway side view of a wear-resistant elongate composite tubular adapted for coupling into a string of elongate tubulars; and
Figure 2 is a perspective view of an elongate composite tubular as shown in Figure 1.

### Modes for Carrying out the Invention

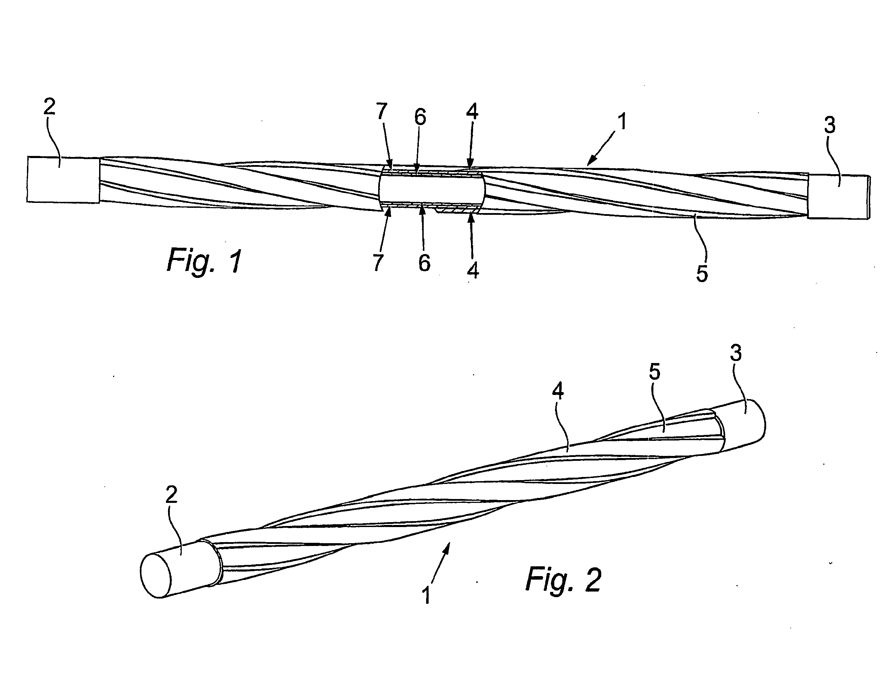

Referring to Figure 1, an improved tubular is shown in the form of stand of drill pipe **1**, that has traditional end coupling means in the form of box and pin ends **2**, **3** respectively for use in forming tool joints in connecting into a drill string, and wear-resistant surface contact ribs **4**, with flow-past channels 5 therebetween. The core of the drill pipe is a mandrel **6**, which in this embodiment is a steel pipe, over which is applied a carbon fibre reinforcement material and bonding material **7** and which is built up to form the ribs 4. Ceramic beads (not shown) are introduced before the composite material is fully cured and generally form a random surface pattern of exposed ceramic smooth surfaces.

In a method of making such an improved tubular, a steel mandrel having traditional box and pin ends is mounted in a treatment booth, and reinforcement and bonding materials suitable for forming a durable composite are applied under composite material forming conditions.

Glass or carbon fibres, or mixed fibres are wound around the mandrel to envelope substantially the whole length of the mandrel excepting the box and pin ends which are protected from treatment. Thereafter, the reinforcement and bonding materials are applied in a winding to build up three helical ribs that are mutually spaced (120 degrees) and angularly displaced along the longitudinal axis by 30 degrees. Towards the end of the build up of the desired outer contact surface depth of the ribs ceramic beads are introduced to the composite-forming material such that the beads provide exposed curved contact surfaces upon the ribs. Spacing of the ribs provides channels for flow past of circulation fluids and cuttings, and also permits agitation of the return cuttings-laden circulation fluid.

Ceramic particles suitable for this purpose include rounded beads (spherical or near spherical particles) of a size typically in the range of 0.3 to 2mm diameter/longest dimension. Suitable materials include the commercially available micro milling beads "ZIRCONOX^{®}" which comprise zirconium oxide (ZrO₂).

Optionally these particles or equivalent are surface treated with a silane coupling agent (epoxysilane) or similar to improve compatibility with the resin matrix of a GRP/GFK winding.

Application of such particles may be carried out in the following way.

Particles are stored in a conical feed hopper with hydraulic or manual gate valve at bottom. A pressurized pneumatic system is provided in proximity to the gate valve to direct an air stream past or below it. This allows particles to drop and become directed by and/or entrained into the pressurized air stream, which allows them to be blown onto the tubular in a controlled manner. In this embodiment controlled delivery of the blown particles is enhanced through use of a flattened nozzle for distributing the particles onto the tubular as the GRP(GFK) winding process is taking place, or as the tubular is rotating immediately after the last winding layer. The particles can be further embedded by application of pressure, e.g. using a hard rubber roller applied with pressure to the surface of the tubular whilst it is rotating. The quantity of particles applied can be regulated by altering either one of, or both air pressure and flow, and by adjustment of the valve at the hopper aperture. The distribution nozzle can be incorporated onto the winding shuttle arrangement.

In the case of application treatment for smaller areas, the ceramic particles are lightly pressed onto an adhesive strip or non woven fleece which is then wound or applied to the tubular. A hard rubber roller applies pressure to the back side of the fleece, embedding the particles in the GRP/CFK matrix. The fleece can then be removed, either prior to curing of the tubular, or after the curing process.

In use several of the aforesaid tubulars are coupled together optionally together with stabilizer subs, or other tool subs to form a drill string connectable to a drill BHA at one end and a rotational drive topside in the normal way.

The invention provides a tubular of improved torque and friction reducing qualities that can be dimensioned to directly replace traditional stands of drill pipe, or incorporated as a sub within a drill string.

The invention provides a weight/strength ratio improvement, fatigue improvement, and increased torsional properties. Further there is provided the capacity to pre-determine the flexibility or stiffness of the tubular.

A further advantage lies in the reduction of wear on the casing when composite tubulars of the invention are used in place of traditional tubulars.

## Claims

1. A composite elongate drill string tubular (1) for use downhole in drilling during oil and gas prospecting and recovery operations comprising a metal mandrel (6) having ends (2, 3) adapted to form a joint with another component of a string of connectable elongate tubulars, wherein an external surface of the tubular comprises a filament wound reinforced composite material (7) having a plurality of exposed ceramic surfaces.

2. A composite elongate tubular as claimed in claim 1, comprising an external surface formed at least in part by a rib (4), wherein said rib has a composite material surface in which a plurality of ceramic elements are fixed, said elements offering low friction points of contact in use, and being partially embedded in said composite material surface.

3. A composite elongate tubular as claimed in claim 2, wherein said rib (4) is configured to extend generally in alignment with the longitudinal axis of the elongate tubular.

4. A composite elongate tubular as claimed in claim 2, wherein said rib (4) extends in a curved path that progresses around the element as a winding.

5. A composite elongate drill string tubular as claimed in claim 1, wherein the mandrel (6) is adapted to be connected within a string of elongate tubulars using box and pin joints (2, 3), wherein the filament wound composite material surface (7) is provided upon an outer surface of the mandrel, the composite material comprising a reinforcement material within a bonding material, said composite material surface providing an external contact surface in which a plurality of ceramic elements are fixed, said elements offering low friction points of contact in use, and being partially embedded in the composite material, and a plurality of flow channels (5) defined in the composite material surface between the external contact surface in which a plurality of ceramic elements are fixed.

6. A composite elongate tubular as claimed in any one of claims 2 to 5, wherein the ceramic elements are discrete particulate entities with smooth contact surfaces, for example ceramic beads.

7. A composite elongate tubular as claimed in any one of claims 2 to 6, wherein the ceramic elements have been treated to enhance hardness and resistance to wear.

8. A composite elongate tubular as claimed in any one of claims 2 to 7, wherein the ceramic elements are randomly positioned.

9. A composite elongate tubular as claimed in any one of claims 2 to 7, wherein the ceramic elements are fixed in a regular pattern or array.

10. A method of making a composite elongate tubular (1) having an external surface in which a plurality of ceramic elements are fixed, said elements offering low friction points of contact in use, and being partially embedded in a composite material (7), wherein the method comprises providing an elongate mandrel (6) having a throughbore aligned with the longitudinal axis of the mandrel, said mandrel having ends (2, 3) adapted to form a joint with another component of a string of connectable elongate tubulars, treating the mandrel under composite material-forming conditions with components comprising reinforcement material and a bonding material in an amount sufficient to form a composite material surface, wherein the mandrel is filament wound with reinforcing fibres to which a bonding material is applied, ***characterised by*** ceramic elements also applied before the composite material is fully formed, such that said ceramic elements present exposed surfaces in the formed composite material surface.

11. A method of making a composite elongate tubular as claimed in claim 10, wherein the winding is such as to develop a continuous surface,

12. A method of making a composite elongate tubular as claimed in claim 10, wherein the winding is such as to develop a rib configuration (4) around the mandrel with flow channels (5) on either side of the rib configuration.

13. A method of making a composite elongate tubular as claimed in any one of claims 10 to 12, wherein the ceramic elements are added during the winding process so as to provide exposed contact surfaces in the formed composite material surface.

14. A method of making a composite elongate tubular as claimed in any one of claims 10 to 13, wherein the mandrel (6) is metallic.

15. A method of making a composite elongate tubular as claimed in any one of claims 10 to 14, wherein the ceramic elements are pre-treated with a silane coupling agent.

16. A method of making a composite elongate tubular as claimed in any one of claims 10 to 15, wherein the ceramic elements are beads of zirconium oxide (ZrO₂), silicon nitride, cubic boron nitride, and mixtures of two or more thereof.

17. A method of making a composite elongate tubular as claimed in any one of claims 10 to 16, wherein the ceramic elements are applied using a gravity feed hopper in conjunction with a pneumatic device arranged to blow elements emerging from the hopper onto the composite material surface upon the mandrel before the composite material is cured.

18. A method of making a composite elongate tubular as claimed in any one of claims 10 to 17, wherein the ceramic elements are pressed into the composite material surface using a roller device.

## Patentansprüche

1. Ein längliches Verbundbohrstrangrohr (1) zur Verwendung unter Tage beim Bohren während Operationen der Öl- und Gassuche und -gewinnung, das eine Metallspindel (6) beinhaltet, die Enden (2, 3) aufweist, welche angepasst sind, um mit einer anderen Komponente eines Strangs von koppelbaren länglichen Rohren eine Verbindung zu bilden, wobei eine äußere Oberfläche des Rohres ein fadengewickeltes verstärktes Verbundmaterial (7) mit einer Vielzahl von freiliegenden keramischen Oberflächen beinhaltet.

2. Längliches Verbundrohr gemäß Anspruch 1, das eine äußere Oberfläche beinhaltet, die mindestens zum Teil durch eine Rippe (4) gebildet ist, wobei die Rippe eine Verbundmaterialoberfläche aufweist, in der eine Vielzahl von keramischen Elementen fixiert ist, wobei die Elemente im Gebrauch Kontaktpunkte geringer Reibung bieten und teilweise in der Verbundmaterialoberfläche eingebettet sind.

3. Längliches Verbundrohr gemäß Anspruch 2, wobei die Rippe (4) konfiguriert ist, um sich im Allgemeinen in Ausrichtung nach der Längsachse des länglichen Rohrs zu erstrecken.

4. Längliches Verbundrohr gemäß Anspruch 2, wobei sich die Rippe (4) in einem gekrümmten Pfad erstreckt, der als Wicklung um das Element verläuft.

5. Längliches Verbundbohrstrangrohr gemäß Anspruch 1, wobei die Spindel (6) angepasst ist, um innerhalb eines Strangs länglicher Rohre unter Verwendung von Muffe-und-Zapfen-Verbindungen (2, 3) gekoppelt zu werden, wobei die fadengewickelte Verbundmaterialoberfläche (7) auf einer Außenoberfläche der Spindel bereitgestellt ist, wobei das Verbundmaterial ein Verstärkungsmaterial innerhalb eines Bindemittel beinhaltet, wobei die Verbundmaterialoberfläche Folgendes bereitstellt: eine äußere Kontaktoberfläche, in der eine Vielzahl von keramischen Elementen fixiert ist, wobei die Elemente im Gebrauch Kontaktpunkte geringer Reibung bieten und teilweise in dem Verbundmaterial eingebettet sind, und eine Vielzahl von Fließkanälen (5), die in der Verbundmaterialoberfläche zwischen der äußeren Kontaktoberfläche, in der eine Vielzahl von keramischen Elementen fixiert ist, definiert sind.

6. Längliches Verbundrohr gemäß einem der Ansprüche 2 bis 5, wobei die keramischen Elemente getrennte partikelförmige Einheiten mit glatten Kontaktoberflächen sind, zum Beispiel keramische Kügelchen.

7. Längliches Verbundrohr gemäß einem der Ansprüche 2 bis 6, wobei die keramischen Elemente behandelt worden sind, um die Härte und Abnutzungsbeständigkeit zu verbessern.

8. Längliches Verbundrohr gemäß einem der Ansprüche 2 bis 7, wobei die keramischen Elemente zufällig positioniert sind.

9. Längliches Verbundrohr gemäß einem der Ansprüche 2 bis 7, wobei die keramischen Elemente in einem regelmäßigen Muster oder einer regelmäßigen Gruppierung fixiert sind.

10. Ein Verfahren zum Herstellen eines länglichen Verbundrohrs (1) mit einer äußeren Oberfläche, in der eine Vielzahl von keramischen Elementen fixiert ist, wobei die Elemente im Gebrauch Kontaktpunkte geringer Reibung bieten und teilweise in einem Verbundmaterial (7) eingebettet sind, wobei das Verfahren Folgendes beinhaltet: Bereitstellen einer länglichen Spindel (6) mit einer Durchgangsbohrung, die nach der Längsachse der Spindel ausgerichtet ist, wobei die Spindel Enden (2, 3) aufweist, welche angepasst sind, um mit einer anderen Komponente eines Strangs von koppelbaren länglichen Rohren eine Verbindung zu bilden, Behandeln der Spindel unter Verbundmaterial bildenden Bedingungen mit Komponenten, die Verstärkungsmaterial und ein Bindemittel in einer ausreichenden Menge, um eine Verbundmaterialoberfläche zu bilden, beinhalten, wobei die Spindel mit Verstärkungsfasern fadengewickelt ist, auf die ein Bindemittel aufgebracht ist, ***dadurch gekennzeichnet, dass*** ebenfalls keramische Elemente aufgebracht werden, bevor das Verbundmaterial vollkommen gebildet ist, so dass die keramischen Elemente freiliegende Oberflächen in der gebildeten Verbundmaterialoberfläche präsentieren.

11. Verfahren zum Herstellen eines länglichen Verbundrohrs gemäß Anspruch 10, wobei die Wicklung derart ist, dass sie eine kontinuierliche Oberfläche entwickelt.

12. Verfahren zum Herstellen eines länglichen Verbundrohrs gemäß Anspruch 10, wobei die Wicklung derart ist, dass sie eine Rippenkonfiguration (4) um die Spindel mit Fließkanälen (5) auf beiden Seiten der Rippenkonfiguration entwickelt.

13. Verfahren zum Herstellen eines länglichen Verbundrohrs gemäß einem der Ansprüche 10 bis 12, wobei die keramischen Elemente während des Wicklungsvorgangs hinzugefügt werden, um in der gebildeten Verbundmaterialoberfläche freiliegende Kontaktoberflächen bereitzustellen.

14. Verfahren zum Herstellen eines länglichen Verbundrohrs gemäß einem der Ansprüche 10 bis 13, wobei die Spindel (6) metallisch ist.

15. Verfahren zum Herstellen eines länglichen Verbundrohrs gemäß einem der Ansprüche 10 bis 14, wobei die keramischen Elemente mit einem Silanhaftvermittler vorbehandelt werden.

16. Verfahren zum Herstellen eines länglichen Verbundrohrs gemäß einem der Ansprüche 10 bis 15, wobei die keramischen Elemente Kügelchen aus Zirconiumoxid (ZrO₂), Siliciumnitrid, kubischem Bornitrid und Mischungen von zwei oder mehr davon sind.

17. Verfahren zum Herstellen eines länglichen Verbundrohrs gemäß einem der Ansprüche 10 bis 16, wobei die keramischen Elemente unter Verwendung eines Schwerkraftzuführtrichters in Verbindung mit einer pneumatischen Vorrichtung aufgebracht werden, die eingerichtet ist, um aus dem Trichter austretende Elemente auf die Verbundmaterialoberfläche auf der Spindel zu blasen, bevor das Verbundmaterial gehärtet wird.

18. Verfahren zum Herstellen eines länglichen Verbundrohrs gemäß einem der Ansprüche 10 bis 17, wobei die keramischen Elemente unter Verwendung einer Rollenvorrichtung in die Verbundmaterialoberfläche gepresst werden.

## Revendications

1. Un tubulaire de train de forage allongé composite (1) destiné à être utilisé en fond de trou lors du forage au cours de la prospection de pétrole et de gaz et des opérations de récupération comprenant un mandrin en métal (6) ayant des extrémités (2, 3) conçues pour former un joint avec un autre composant d'un train de tubulaires allongés raccordables, une surface externe du tubulaire comprenant un matériau composite renforcé à enroulement filamentaire (7) ayant une pluralité de surfaces céramiques apparentes.

2. Un tubulaire allongé composite tel que revendiqué dans la revendication 1, comprenant une surface externe formée au moins en partie par une nervure (4), ladite nervure ayant une surface de matériau composite dans laquelle une pluralité d'éléments céramiques sont fixés, lesdits éléments offrant des points de contact à faible frottement en utilisation, et étant partiellement encastrés dans ladite surface de matériau composite.

3. Un tubulaire allongé composite tel que revendiqué dans la revendication 2, dans lequel ladite nervure (4) est configurée pour se prolonger de façon à être généralement en alignement avec l'axe longitudinal du tubulaire allongé.

4. Un tubulaire allongé composite tel que revendiqué dans la revendication 2, dans lequel ladite nervure (4) se prolonge selon une trajectoire incurvée qui progresse autour de l'élément en tant qu'enroulement.

5. Un tubulaire de train de forage allongé composite tel que revendiqué dans la revendication 1, dans lequel le mandrin (6) est conçu pour être raccordé au sein d'un train de tubulaires allongés à l'aide de joints à filetage femelle et mâle (2, 3), dans lequel la surface de matériau composite à enroulement filamentaire (7) est fournie par-dessus une surface extérieure du mandrin, le matériau composite comprenant un matériau de renforcement au sein d'un matériau liant, ladite surface de matériau composite fournissant une surface de contact externe dans laquelle une pluralité d'éléments céramiques sont fixés, lesdits éléments offrant des points de contact à faible frottement en utilisation, et étant partiellement encastrés dans le matériau composite, et une pluralité de canaux d'écoulement (5) définis dans la surface de matériau composite entre la surface de contact externe dans laquelle une pluralité d'éléments céramiques sont fixés.

6. Un tubulaire allongé composite tel que revendiqué dans n'importe laquelle des revendications 2 à 5, dans lequel les éléments céramiques sont des entités particulaires discrètes dotées de surfaces de contact lisses, par exemple des perles céramiques.

7. Un tubulaire allongé composite tel que revendiqué dans n'importe laquelle des revendications 2 à 6, dans lequel les éléments céramiques ont été traités afin d'améliorer la dureté et la résistance à l'usure.

8. Un tubulaire allongé composite tel que revendiqué dans n'importe laquelle des revendications 2 à 7, dans lequel les éléments céramiques sont positionnés de façon aléatoire.

9. Un tubulaire allongé composite tel que revendiqué dans n'importe laquelle des revendications 2 à 7, dans lequel les éléments céramiques sont fixés selon une grille ou un motif régulier.

10. Une méthode pour réaliser un tubulaire allongé composite (1) ayant une surface externe dans laquelle une pluralité d'éléments céramiques sont fixés, lesdits éléments offrant des points de contact à faible frottement en utilisation, et étant partiellement encastrés dans un matériau composite (7), la méthode comprenant le fait de fournir un mandrin allongé (6) ayant un alésage débouchant aligné sur l'axe longitudinal du mandrin, ledit mandrin ayant des extrémités (2, 3) conçues pour former un joint avec un autre composant d'un train de tubulaires allongés raccordables, de traiter le mandrin dans des conditions de formation de matériau composite avec des composants comprenant le matériau de renforcement et un matériau liant dans une quantité suffisante pour former une surface de matériau composite, dans laquelle le mandrin est à enroulement filamentaire avec des fibres de renfort sur lesquelles un matériau liant est appliqué, ***caractérisée par*** des éléments céramiques également appliqués avant que le matériau composite ne soit entièrement formé, de telle sorte que lesdits éléments céramiques présentent des surfaces apparentes dans la surface de matériau composite formée.

11. Une méthode pour réaliser un tubulaire allongé composite telle que revendiquée dans la revendication 10, dans laquelle l'enroulement est tel qu'une surface continue se développe.

12. Une méthode pour réaliser un tubulaire allongé composite telle que revendiquée dans la revendication 10, dans laquelle l'enroulement est tel qu'une configuration en nervure (4) se développe autour du mandrin avec des canaux d'écoulement (5) de chaque côté de la configuration en nervure.

13. Une méthode pour réaliser un tubulaire allongé composite telle que revendiquée dans n'importe laquelle des revendications 10 à 12, dans laquelle les éléments céramiques sont ajoutés au cours du processus d'enroulement afin de fournir des surfaces de contact apparentes dans la surface de matériau composite formée.

14. Une méthode pour réaliser un tubulaire allongé composite telle que revendiquée dans n'importe laquelle des revendications 10 à 13, dans laquelle le mandrin (6) est métallique.

15. Une méthode pour réaliser un tubulaire allongé composite telle que revendiquée dans n'importe laquelle des revendications 10 à 14, dans laquelle les éléments céramiques sont prétraités avec un agent de couplage à base de silane.

16. Une méthode pour réaliser un tubulaire allongé composite telle que revendiquée dans n'importe laquelle des revendications 10 à 15, dans laquelle les éléments céramiques sont des perles d'oxyde de zirconium (ZrO₂), de nitrure de silicium, de nitrure de bore cubique, et des mélanges de deux de ceux-ci ou plus.

17. Une méthode pour réaliser un tubulaire allongé composite telle que revendiquée dans n'importe laquelle des revendications 10 à 16, dans laquelle les éléments céramiques sont appliqués à l'aide d'une trémie à alimentation par gravité en conjonction avec un dispositif pneumatique agencé afin de souffler des éléments émergeant de la trémie sur la surface de matériau composite par-dessus le mandrin avant que le matériau composite ne soit durci.

18. Une méthode pour réaliser un tubulaire allongé composite telle que revendiquée dans n'importe laquelle des revendications 10 à 17, dans laquelle les éléments céramiques sont enfoncés dans la surface de matériau composite à l'aide d'un dispositif à rouleau.
